# EUROPÄISCHE PATENTSCHRIFT

(11) **EP 1 116 764 B1**
(45) Veröffentlichungstag und Bekanntmachung des Hinweises auf die Patenterteilung: **08.09.2004**
(21) Anmeldenummer: 00125882.1
(22) Anmeldetag: 25.11.2000
(51) Int. Cl.: C09J 7/04, D04H 1/54, D04H 3/14

(54) **Textiles Klebeband**
Cloth adhesive tape
Bande adhésive en tissu

(30) Priorität: 29.12.1999 DE 29922950 U
(43) Veröffentlichungstag der Anmeldung: 18.07.2001
(73) Patentinhaber: Coroplast Fritz Müller GmbH & Co. KG, 42279 Wuppertal (DE)
(72) Erfinder: Lodde, Christoph, 44225 Dortmund (DE)
(74) Vertreter: Zapf, Christoph, Dipl.-Ing.

(56) Entgegenhaltungen:
- EP-A- 0 668 336
- WO-A-99/24518
- DE-A- 19 523 494
- DE-U- 29 819 014
- US-A- 5 629 078
- US-A- 5 631 073

## Beschreibung

Die vorliegende Erfindung betrifft ein Klebeband bestehend aus einem bandförmigen textilen Träger und einer auf dem Träger aufgebrachten Klebebeschichtung nach dem Oberbegriff des Anspruchs 1.

Textile Klebebänder sind in verschiedenen Ausführungsformen bekannt und werden vielfach eingesetzt. Textile Klebebänder bei denen der textile Träger aus Zellwollgewebe besteht, haben den Nachteil, dass diese aufgrund des Zellwollgewebes teuer und verrottbar sind. Zellwoll-Klebebänder sind auch mit einer zusätzlichen Acrylatbeschichtung bekannt. Die Herstellung dieser acrylatbeschichteten Träger ist aber sehr aufwendig und somit sehr teuer. Ebenfalls mit hohen Herstellungskosten verbunden sind textile Klebebänder aus Polyethylenterephthalat (PET)-Gewebe. Klebebänder die als textilen Träger Nadelvlies verwenden, können als auf sich.selbst gewickelte Klebebänder nur mit einem zusätzlichen Interliner hergestellt werden, da Nadelvlies aufgrund seiner rauhen Oberflächenstruktur im aufgerollten Zustand derart stark verklebt, dass ein Abrollen des Bandes nicht mehr möglich ist. Der Einsatz solcher Interliner macht die Herstellung solcher Textilbänder aufwendig und ist entsprechend kostenaufwendig.

Der vorliegenden Erfindung liegt die Aufgabe zugrunde ein textiles Klebeband der eingangs beschriebenen Art zu schaffen, dass ohne besondere Abdeckung oder Behandlung der Klebebeschichtung leicht gebrauchsfähig abgerollt werden kann und die obengenannten Nachteile nicht aufweist.

Erfindungsgemäß wird dies durch ein gattungsgemäßes Klebeband mit den Merkmalen des Kennzeichnens des Anspruchs 1 erreicht.

Eine Verschmelzung der Fasern erfolgt dabei vorzugsweise durch eine einseitige thermische Kalandrierung des Trägermaterials. Durch die erfindungsgemäße Behandlung des Fasermaterials entsteht eine Oberfläche, die beim Aufrollen des Bandes ein zu starkes Verkleben mit der folgenden Schicht und beim Abrollen des Bandes ein Herausreissen der Fasern aus ihrem Verband verhindert. Somit wird ein kostengünstiges textiles Klebeband aus Nadelvlies ohne zusätzlichen Interliner geschaffen.

Weitere vorteilhafte Ausgestaltungsmerkmale der Erfindung sind in den Unteransprüchen enthalten. Anhand des in den beiliegenden Zeichnungen dargestellten Ausführungsbeispiels wird die Erfindung näher erläutert. Dabei zeigen:
- Fig. 1: einen Teilabschnitt des erfindungsgemäßen Klebebands in Seitenansicht,
- Fig. 2: ein erfindungsgemäßes Klebeband, aufgewickelt in Form einer archimedischen Spirale in Seitenansicht.

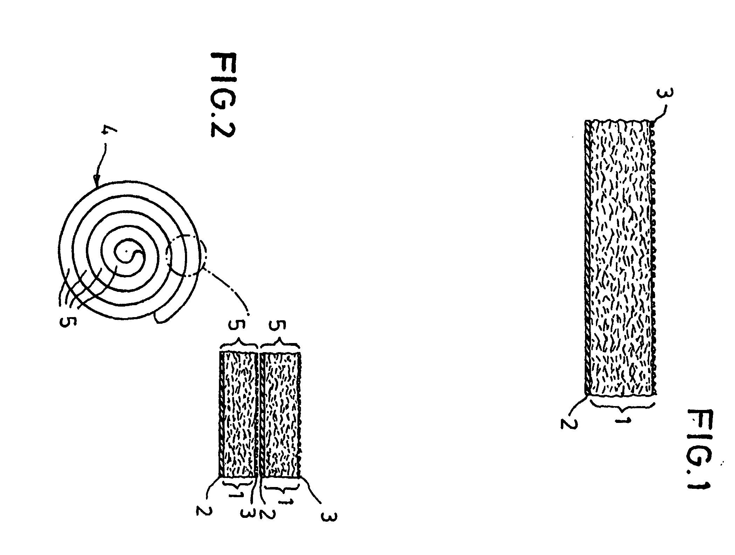

Wie aus Fig. 1 zu entnehmen ist, besteht ein erfindungsgemäßes Klebeband aus einem bandförmigen Träger 1 aus einem textilen Vliesmaterial. Dieses Vliesmaterial ist ein textiles Flächengebilde aus einer Aneinanderreihung und Aufeinanderschichtung geordneter und ungeordneter Fasern. Es kann aus Längs-, Längs- und Quer-, Querfasern oder einer vollkommen ungeordneten Faserlage bestehen. Durch eine mechanische Vernadelung werden die Fasern vorverfestigt. Die Verwendung von mindestens zwei unterschiedlichen Fasermaterialien ist vorteilhaft, da dadurch unterschiedliche Eigenschaften des Vlieses eingestellt werden können. Dabei ist entscheidend, dass die verwendeten Fasermaterialien unterschiedliche Schmelztemperaturen besitzen. Fasern mit niedriger Schmelztemperatur sind z. B. Fasern aus der Gruppe der Polyolefine wie Polypropylen (PP) oder Polyethylen (PE)), sie können bei Temperaturen > 150° C angeschmolzen werden. Fasern mit einer hohen Schmelztemperatur sind beispielsweise Fasern aus der Gruppe der Polyole wie z. B. Polyethylenterephthalat (PET) oder Polybutylenterephlalat Fasern mit einer Schmelztemperatur von > 200° C. Vorzugsweise können folgende Faserabmischungen eingesetzt werden:

| | |
|---|---|
| PP-Fasern | 99% bis 1 % |
| PET-Fasern | 1% bis 99%. |
| | |
| PE-Fasern | 80 % bis 50 % |
| PBT-Fasern | 20 % bis 50 %. |

Erfindungsgemäße verwendete Nadelvliese weisen Flächengewichte von etwa 20 bis 200 g/m² auf.

Wie der Skizze weiterhin zu entnehmen ist, ist auf einer Seite des bandförmigen textilen Trägers 1 eine Klebeschicht 2 angeordnet. Diese Klebeschicht 2 besteht aus einem druckempfindlichen Klebstoff. Beispielsweise können Naturoder Synthesekautschuk-Kleber, Acrylatkleber und UV-vernetzbare Acrylatkleber eingesetzt werden.

Der bandförmige textile Träger 1 weist auf der der Klebeschicht 2 gegenüberliegenden Seite eine angeschmolzene und verdichtete Oberfläche 3 auf. Das Anschmelzen der Oberfläche erfolgt vorteilhafterweise durch eine einseitige Kalandrierung des Nadelvlieses unter Wärmebeaufschlagung und ist notwendig, damit ein auf sich selbst gewickeltes Klebeband hergestellt werden kann. Die Kalandertemperatur beträgt 170° bis 190° C. Bei der Verwendung von Fasern mit unterschiedlichen Schmelztemperaturen wird durch Einstellen der Kalanderwalzentemperatur nur die Faser selektiv angeschmolzen die eine entsprechend niedrige Schmelztemperatur hat. Die schmelzbare Faser bestimmt damit die Festigkeitseigenschaften bzw. die Kohäsionseigenschaften des Klebebandes. Die verwendete Faser mit dem höheren Schmelzpunkt bleibt dagegen unangeschmolzen und bildet die Grundlage für den textilen Charakter des Bandes (Weichheit des Vlieses, Polstereigenschaften). Je nach Abmischung der Fasern können Vliese mit hoher oder mit niedriger Zugfestigkeit produziert werden. Je höher der Anteil der Fasern mit der geringeren Schmelztemperatur, desto höher ist der Grad der Versiegelung der Oberfläche.

Auf Basis des erfindungsgemäßen textilen Klebebandes können vorteilhafterweise die folgenden Anwendungsbeispiele realisiert werden:
- *Kabelwickelband mit Antidröhneigenschaften,* dessen bandförmiger textiler Träger 1 insbesondere aus 50 % PP-Fasern und 50 % PET-Fasern besteht und ein Flächengewicht von 100 g/m² aufweist. Als Klebstoff wird vorzugsweise ein Synthesekautschuk-Kleber mit einer Flächendichte von 130 g/m² verwendet.
- *General Purpose Tape* mit einem bandförmigen textilen Träger 1 bestehend aus 80 % PP-Fasern und 20 % PET-Fasern mit einem Flächengewicht von 50 g/m². Als Klebstoff wird ebenfalls Synthesekautschuk-Kleber mit einer Flächendichte von 130 g/m² eingesetzt.
- *Masking Tape* mit 80 % PP-Fasern und 20 % PET-Fasern im Nadelvlies und einem Flächengewicht von 50 g/m². Als Klebstoff wird ein UV-vernetzter Acrylatkleber verwendet, der eine Flächendichte von 100 g/m² aufweist.

Die verwendeten Polyesterfasern haben eine Stärke von 1,5 dtex und eine Länge von 60mm. Die Polypropylen- und Polyethylen-Fasern haben eine Stärke von 4,4 dtex und eine Länge von 60mm.

Das erfindungsgemäße Klebeband kann, wie Fig. 2 zu entnehmen ist, in Form einer archimedischen Spirale zu einer Rolle 4 aufgewickelt werden, wobei die Klebebandlagen 5 unmittelbar aufeinanderliegen. Es ist damit einfach zu handhaben und zu transportieren. Aufgrund des durch das Herstellungsverfahren exakt einstellbaren Abrollwiderstands kann ein Abrollen ohne Ausreißen von Fasern aus dem Faserverband gewährleistet werden. Das Klebeband eignet sich dadurch hervorragend für eine maschinelle Verarbeitung.

Die Erfindung ist nicht auf das dargestellte und beschriebene Ausführungsbeispiel beschränkt sondern umfaßt auch alle im Sinne der Erfindung gleichwirkenden Ausführungen.

## Patentansprüche

1. Klebeband bestehend aus einem bandförmigen, textilen Träger (1) und einer auf dem bandförmigen textilen Träger (1) aufgebrachten Klebebeschichtung (2), wobei der bandförmige Träger (1) zumindest teilweise aus einem Vlies aus mindestens teilweise thermoplastischen Kunststofffasem besteht, wobei die thermoplastischen Kunststofffasern auf der der Klebebeschichtung (2) gegenüberliegenden Seite durch Anschmelzen bei einer bestimmten Temperatur zumindest teilweise miteinander verbunden sind,
**dadurch gekennzeichnet, dass** der bandförmige textile Träger (1) zumindest teilweise aus einem Nadelvlies besteht, welches aus mindestens zwei Fasermaterialien mit unterschiedlichen Schmelztemperaturen gebildet ist, wobei die Schmelztemperatur des ersten Fasermaterials größer als 150 °C und geringer als die Anschmelztemperatur ist und wobei die Schmelztemperatur des zweiten Fasermaterials höher als 200 °C und höher als die Anschmelztemperatur ist, derart, dass das Nadelvlies mindestens teilweise aus geschmolzenen Kunststofffasem des ersten Fasermaterials und aus ungeschmolzenen Kunststofffasern des zweiten Fasermaterials besteht.

2. Klebeband nach Anspruch 1,
**dadurch gekennzeichnet, dass** der bandförmige textile Träger (1) mindestens einseitig, insbesondere durch eine thermische Kalandrierung, verdichtet ist.

3. Klebeband nach einem der Ansprüche 1 bis 2,
**dadurch gekennzeichnet, dass** der bandförmige textile Träger (1) aus einem Gemisch von Fasermaterialien von mindestens einem Fasermaterial aus der Gruppe der Polyolefine, und mindestens einem Fasermaterial aus der Gruppe der Polyole besteht.

4. Klebeband nach einem der Ansprüche 1 bis 3,
**dadurch gekennzeichnet, dass** die Klebebeschichtung (2) aus einem druckempfindlichen Haftkleber besteht.

5. Klebeband nach einem der Ansprüche 1 bis 4,
**dadurch gekennzeichnet, dass** der bandförmige textile Träger (1) eine Flächendichte von 20 bis 200 g/m², insbesondere 50 g/m² oder 100 g/m² aufweist.

6. Klebeband nach einem der Ansprüche 4 bis 5,
**dadurch gekennzeichnet, dass** der bandförmige textile Träger (1) aus einem Gemisch aus den Fasermaterialien Polyethylen (PE) und Polyethylenterephthalat (PET) besteht.

7. Klebeband nach Anspruch 6,
**dadurch gekennzeichnet, dass** das Fasergemisch zu 80 % bis 50 % aus dem Fasermaterial Polyethylen (PE) und zu 20 % bis 50 % aus dem Fasermaterial Polybutylenterephthalat (PBT) besteht.

8. Klebeband nach einem der Ansprüche 4 bis 7,
**dadurch gekennzeichnet, dass** der bandförmige textile Träger (1) aus einem Gemisch aus den Fasermaterialien Polypropylen (PP) und Polyethylenterephthalat (PET) besteht

9. Klebeband nach Anspruch 8,
**dadurch gekennzeichnet, dass** das Fasergemisch zu 99 % bis 1 % aus dem Fasermaterial Polypropylen (PP) und zu 1 % bis 99 % aus dem Fasermaterial Polyethylenterephthalat (PET) besteht.

10. Klebeband nach Anspruch 9,
**dadurch gekennzeichnet, dass** das Fasergemisch zu 50 % aus dem Fasermaterial Polypropylen (PP) und zu 50 % aus dem Fasermaterial Polyethylenterephthalat (PET) besteht.

11. Klebeband nach Anspruch 9,
**dadurch gekennzeichnet, dass** das Fasergemisch zu 80 % aus dem Fasermaterial Polypropylen (PP) und zu 20 % aus dem Fasermaterial Polyethylenterephthalat (PET) besteht.

12. Klebeband nach einem der Ansprüche 1 bis 11,
**dadurch gekennzeichnet, dass** die Klebebeschichtung (2) aus Synthesekautschuk-Kleber besteht

13. Klebeband nach einem der Ansprüche 1 bis 12,
**dadurch gekennzeichnet, dass** die Klebebeschichtung (2) eine Flächendichte von 130 g/m² aufweist.

14. Klebeband nach Anspruch einem der Ansprüche 1 bis 13,
**dadurch gekennzeichnet, dass** die Klebebeschichtung (2) aus UV-vemetztem Acrylatkleber besteht.

15. Klebeband nach einem der Ansprüche 1 bis 14,
**dadurch gekennzeichnet, dass** die Klebebeschichtung (2) eine Flächendichte von 100 g/m² aufweist.

16. Klebebandrolle unter Verwendung des in den Ansprüchen 1 bis 15 bezeichneten Klebebandes,
**dadurch gekennzeichnet, dass** das Klebeband in Form einer archimedischen Spirale zu einer Rolle (4) aufgewickelt ist, wobei die Klebebandlagen (5) unmittelbar aufeinanderliegen.

## Claims

1. Adhesive tape comprising a tapelike textile backing (1) and an adhesive coating (2) applied to the tapelike textile backing (1), the tapelike backing (1) being composed at least in part of a nonwoven comprising polymer fibres which are at least in part thermoplastic, the thermoplastic polymer fibres being connected to one another, at least in part, by incipient melting at a particular temperature on the side opposite the adhesive coating (2), **characterized in that** the tapelike textile backing (1) is composed at least in part of a needlefelt which is formed from at least two fibre materials having different melting temperatures, the melting temperature of the first fibre material being greater than 150°C and lower than the incipient melting temperature and the melting temperature of the second fibre material being higher than 200°C and higher than the incipient melting temperature, such that the needlefelt is composed at least partly of melted polymer fibres of the first fibre material and of unmelted polymer fibres of the second fibre material.

2. Adhesive tape according to Claim 1, **characterized in that** the tapelike textile backing (1) has been consolidated on at least one side, in particular by thermal calendering.

3. Adhesive tape according to one of Claims 1 to 2, **characterized in that** the tapelike textile backing (1) is composed of a blend of fibre materials of at least one fibre material from the group of the polyolefins and at least one fibre material from the group of the polyols.

4. Adhesive tape according to one of Claims 1 to 3, **characterized in that** the adhesive coating (2) is composed of a pressure-sensitive adhesive.

5. Adhesive tape according to one of Claims 1 to 4, **characterized in that** the tapelike textile backing (1) has a density of from 20, to 200 g/m², in particular 50 g/m² or 100 g/m².

6. Adhesive tape according to one of Claims 4 to 5, **characterized in that** the tapelike textile backing (1) is composed of a blend of the fibre materials polyethylene (PE) and polyethylene terephthalate (PET).

7. Adhesive tape according to Claim 6, **characterized in that** the fibre blend is composed of from 80% to 50% of the fibre material polyethylene (PE) and from 20% to 50% of the fibre material polybutylene terephthalate (PBT).

8. Adhesive tape according to one of Claims 4 to 7, **characterized in that** the tapelike textile backing (1) is composed of a blend of the fibre materials polypropylene (PP) and polyethylene terephthalate (PET).

9. Adhesive tape according to Claim 8, **characterized in that** the fibre blend is composed of from 99% to 1% of the fibre material polypropylene (PP) and from 1% to 99% of the fibre material polyethylene terephthalate (PET).

10. Adhesive tape according to Claim 9, **characterized in that** the fibre blend is composed of 50% of the fibre material polypropylene (PP) and 50% of the fibre material polyethylene terephthalate (PET).

11. Adhesive tape according to Claim 9, **characterized in that** the fibre blend is composed of 80% of the fibre material polypropylene (PP) and 20% of the fibre material polyethylene terephthalate (PET).

12. Adhesive tape according to one of Claims 1 to 11, **characterized in that** the adhesive coating (2) is composed of synthetic rubber adhesive.

13. Adhesive tape according to one of Claims 1 to 12, **characterized in that** the adhesive coating (2) has a density of 130 g/m².

14. Adhesive tape according to one of Claims 1 to 13, **characterized in that** the adhesive coating (2) is composed of UV-crosslinked acrylate adhesive.

15. Adhesive tape according to one of Claims 1 to 14, **characterized in that** the adhesive coating (2) has a density of 100 g/m².

16. Adhesive tape roll using the adhesive tape designated in Claims 1 to 15, **characterized in that** the adhesive tape has been wound up in the form of an Archimedean spiral to form a roll (4) in which the adhesive tape plies (5) lie directly on top of one another.

## Revendications

1. Ruban adhésif comprenant un support textile en forme de bande (1) et un enduit adhésif (2) appliqué sur le support textile en forme de bande (1), le support textile en forme de bande (1) étant au moins constitué en partie par un feutre composé au moins en partie de fibres synthétiques thermoplastiques, les fibres synthétiques thermoplastiques étant liées entre elles, au moins en partie, par fusion à une température donnée, sur la face opposée à l'enduit adhésif (2), **caractérisé en ce que** le support en forme de bande (1) est constitué au moins en partie par un feutre aiguilleté, lequel est formé par au moins deux sortes de fibres ayant des températures de fusion différentes, la température de fusion de la première sorte de fibres étant supérieure à 150°C et inférieure à la température de fusion générale et la température de fusion de la deuxième sorte de fibres étant supérieure à 200°C et supérieure à la température de fusion générale, de sorte que le feutre aiguilleté est constitué au moins en partie par des fibres synthétiques fondues de la première sorte de fibres et par des fibres synthétiques non fondues de la deuxième sorte de fibres.

2. Ruban adhésif selon la revendication 1, **caractérisé en ce que** le support textile en forme de bande (1) est comprimé au moins sur une face, en particulier par un calandrage thermique.

3. Ruban adhésif selon l'une des revendications 1 à 2, **caractérisé en ce que** le support textile en forme de bande (1) est constitué d'un mélange de sortes de fibres dont au moins une est du groupe des polyoléfines et au moins une autre du groupe des polyols.

4. Ruban adhésif selon l'une des revendications 1 à 3, **caractérisé en ce que** l'enduit adhésif (2) est constitué par un adhésif sensible à la pression.

5. Ruban adhésif selon l'une des revendications 1 à 4, **caractérisé en ce que** le support textile en forme de bande (1) présente une densité de surface de 20 à 200 g/m², en particulier de 50 g/m² ou de 100 g/m².

6. Ruban adhésif selon l'une des revendications 4 à 5, **caractérisé en ce que** le support textile en forme de bande (1) est constitué d'un mélange de fibres de polyéthylène (PE) et de téréphtalate de polyéthylène (PET).

7. Ruban adhésif selon la revendication 6, **caractérisé en ce que** le mélange de fibres est constitué pour 80% à 50% de fibres de polyéthylène et pour 20 à 50% de fibres de téréphtalate de polybutylène (PBT).

8. Ruban adhésif selon l'une des revendications 4 à 7, **caractérisé en ce que** le support textile en forme de bande (1) est constitué d'un mélange de fibres de polypropylène (PP) et de téréphtalate de polyéthylène (PET).

9. Ruban adhésif selon la revendication 8, **caractérisé en ce que** le mélange de fibres est constitué pour 99% à 1% de fibres de polypropylène (PP) et pour 1% à 99% de fibres de téréphtalate de polyéthylène (PET).

10. Ruban adhésif selon la revendication 9, **caractérisé en ce que** le mélange de fibres est constitué à 50% de fibres de polypropylène (PP) et à 50% de fibres de téréphtalate de polyéthylène (PET).

11. Ruban adhésif selon la revendication 9, **caractérisé en ce que** le mélange de fibres est constitué à 80% de fibres de polypropylène (PP) et à 20% de fibres de téréphtalate de polyéthylène (PET).

12. Ruban adhésif selon l'une des revendications 1 à 11, **caractérisé en ce que** l'enduit adhésif (2) consiste en une colle à base de caoutchouc de synthèse.

13. Ruban adhésif selon l'une des revendications 1 à 12, **caractérisé en ce que** l'enduit adhésif (2) présente une densité de surface de 130 g/m².

14. Ruban adhésif selon l'une des revendications 1 à 13, **caractérisé en ce que** l'enduit adhésif (2) consiste en une colle acrylate réticulée aux UV.

15. Ruban adhésif selon l'une des revendications 1 à 14, **caractérisé en ce que** l'enduit adhésif (2) présente une densité de surface de 100 g/m².

16. Rouleau de ruban adhésif formé avec le ruban adhésif décrit dans les revendications 1 à 15, **caractérisé en ce que** le ruban adhésif est enroulé en forme de spirale d'Archimède pour obtenir un rouleau (4), les couches de ruban adhésif (5) reposant directement l'une sur l'autre.
